# EUROPÄISCHE PATENTSCHRIFT

(11) **EP 2 276 131 B1**
(45) Veröffentlichungstag und Bekanntmachung des Hinweises auf die Patenterteilung: **09.10.2013**
(21) Anmeldenummer: 10007176.0
(22) Anmeldetag: 12.07.2010
(51) Int. Cl.: H02G 3/04, H02G 3/06, F16L 3/26

(54) **Schutzhülle**
Protective casing
Enveloppe de protection

(30) Priorität: 13.07.2009 DE 102009033174
(43) Veröffentlichungstag der Anmeldung: 19.01.2011
(73) Patentinhaber: Robert Bosch GmbH, 70442 Stuttgart (DE)
(72) Erfinder: Ammann, Rainer, 86399 Bobingen (DE)

(56) Entgegenhaltungen:
- EP-A2- 0 409 807
- GB-A- 2 288 845
- GB-A- 2 393 041
- US-A- 4 349 220

## Beschreibung

Die Erfindung betrifft eine Schutzhülle, die generell als Kabelkanal bezeichnet wird. Im einzelnen betrifft sie eine Schutzhülle für das Einlegen und Entnehmen von elektrischen Strom, Signale, Steuerbefehle, Flüssigkeiten oder Gase führenden Leitungen in Form von Kabeln, Rohren oder dergl, mit einem längs eines Supports, wie einer Wand, eines Plafonds oder dergl., sich erstreckenden und daran befestigbaren und im Querschnitt U-förmigen Kanal aus insbesondere Metall oder Kunststoff, sowie mit einer an freien Enden von Seitenstegen des U-Querschnitts des Kanals mittels Verschraubungen befestigbaren Abdeckung seines für das Einbringen der Leitungen zunächst nach oben offenen Hohlraums, wobei Randbereiche der freien Enden der Seitenstege im wesentlichen parallel zur gegenüberliegenden Innenfläche der Abdeckung abgebogen sind und Randbereiche der Abdeckung die Randbereiche der Seitenstege übergreifen und im wesentlichen parallel zu den Seitenstegen hin abgebogen sind, und ferner in Kanalrichtung verlaufende elastische Dichtstreifen zwischen diesen Randbereichen und der Innenfläche der Abdeckung angeordnet sind. Eine solche Schutzhülle ist aus der GB 2 393 041 A bekannt.

Zur Vereinfachung wird im Folgenden zumeist die Bezeichnung Kabelkanal verwendet, auch wenn zu betonen ist, dass die Schutzhülle keineswegs nur für Kabel, also elektrische Leitungen, einsetzbar ist.

Übliche Kabelkanäle besitzen keine einwandfreie Abdichtung zwischen den freien Enden der Seitenstege ihres U-Querschnitts und ihrer Abdeckung, so dass Verunreinigungen in den Hohlraum bzw. das Innere des jeweiligen Kanals eindringen können, wie Staub, Ungeziefer, Mikroben und auch Feuchtigkeit, wobei der Kabelkanal Feuchtigkeit zwangsläufig dadurch ausgesetzt wird, dass sein Äußeres von Zeit zu Zeit gereinigt werden muß.

Diese Abdichtung ist bei dem eingangs beschriebenen Kabelkanal bereits verbessert, doch besitzt er eine waagerechte Abdeckung, welche das Ablaufen von Feuchtigkeit nach den Seiten nicht begünstigt. Ferner erfordert er in den Randbereichen seiner Seitenstege eine Mehrzahl von Abkantungen, was den Herstellungsaufwand erhöht. Schließlich sind auch die Schraubbefestigungen nicht günstig angeordnet, da sie die vorhandenen Dichtungen durchbrechen. Von außen her eindringende Flüssigkeit soll in zwischen Abdeckung und Seitenstegen vorhandenen Kanälen gesammelt und abgeführt werden.

Außerdem ist es bekannt, für den gleichen Zweck Rohrsysteme zu verwenden, welche dort, wo Leitungen eingelegt werden sollen, sogenannte Break-Out-Boxen aufweisen, deren Verbindung mit den jeweiligen Rohren aufwendig ist. Dabei ist der Installationsaufwand sehr groß. Ferner ist auch eine Anpassung an sich ändernde Installationen infolge des großen Aufwandes bei einem nachträglichen Einziehen von Leitungen in die vorhandenen Rohre schwierig und zeitraubend. Dies gilt vor allem auch dann, wenn an nicht von vorneherein vorgesehenen Stellen des einen Kabelkanal bildenden Rohrsystems nachträglich Leitungen eingeführt oder herausgeführt werden müssen.

Die der Erfindung zugrunde liegende Aufgabe wird darin gesehen, die eingangs beschriebene Schutzhülle dahingehend weiterzuentwickeln, dass sie hinsichtlich ihres Aufbaus vereinfacht und hinsichtlich ihrer Funktion verbessert wird.

Diese Aufgabe wird erfindungsgemäß dadurch gelöst, dass die äußere Oberfläche der Abdeckung relativ zur Richtung der Schwerkraft geneigt angeordnet ist, dass die Randbereiche der freien Enden der Seitenstege jeweils nach innen zur Kanalmittelebene hin abgebogen sind, dass an den der Abdeckung zugewandten Flächen der Randbereiche der Seitenstege Schraubbolzen angesiegelt sind, die beim Aufbringen der Abdeckung durch mit ihnen fluchtende Löcher in der Abdeckung hindurchsteckbar sind und mit passenden Muttem die genannten Verschraubungen bilden, und dass die elastischen Dichtstreifen im Bereich der Kanten der Randbereiche der Seitenstege angeordnet und von den Verschraubungen nach innen beabstandet sind.

Die Neigung der äußeren Oberfläche der Abdeckung sorgt für ein leichteres Ablaufen von Verunreinigungen, insbesondere von Flüssigkeiten, denn unter dem Begriff "Neigung" ist jede dachförmige Ausbildung der Abdeckung mit einer von der Waagerechten und natürlich auch von der Senkrechten abweichende Winkellage der Abdeckungsflächen zu verstehen. Abgesehen davon entspricht die Neigung der Randbereiche der Seitenstege im Wesentlichen der Neigung der Randbereiche der Abdeckung, derart, dass das Abfließen etwa eindringender Flüssigkeit zu den Außenseiten des Kabelkanals hin begünstigt ist.

Die gekennzeichnete Ausbildung der Randbereiche sowohl der Seitenstege als auch der Abdeckung sorgt für eine einfache Verbindung und erleichtert die Verwendung einer Dichtung zwischen denselben.

Das Anschweißen oder Ankleben der Schraubbolzen sorgt dafür, dass im Bereich der Verschraubungen keine Durchlässe für Verschmutzungen und Feuchtigkeit in das Innere bzw. den Hohlraum des Kabelkanals entstehen können.

Die gekennzeichnete Anordnung von Dichtungsstreifen längs der Kanten der Randbereiche der Seitenstege sorgt schließlich dafür, dass nach dem Verschrauben von Kanal und Abdeckung in wiederholbarer Art und Weise eine einwandfreie, praktisch hermetische Abdichtung zwischen der Abdeckung und den Seitenstegen zustande kommt, welch letztere bzw. deren Randbereiche spätestens nach der Verschraubung mit der Abdeckung an die jeweilige Geneigtheit derselben angepasst sind und dadurch den Ablauf etwa eingedrungener Feuchtigkeit unterstützen. Bei der bevorzugten satteldachförmigen Ausbildung der Abdeckung verläuft die Neigung nämlich beiderseits jeweils nach außen und unten.

Die Verwendung von Halterungen im Hohlraum des Kabelkanals erleichtert die Handhabung einzulegender oder zu entnehmender Leitungen.

Die Erfindung und ihre vorteilhaften Ausgestaltungen sind im Folgenden anhand eines in der Zeichnung dargestellten Ausführungsbeispiels näher erläutert.

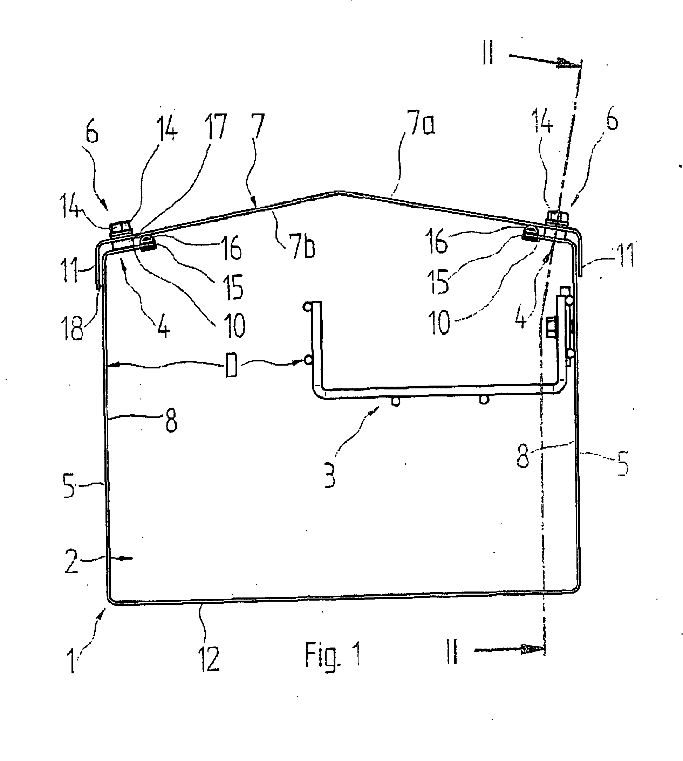

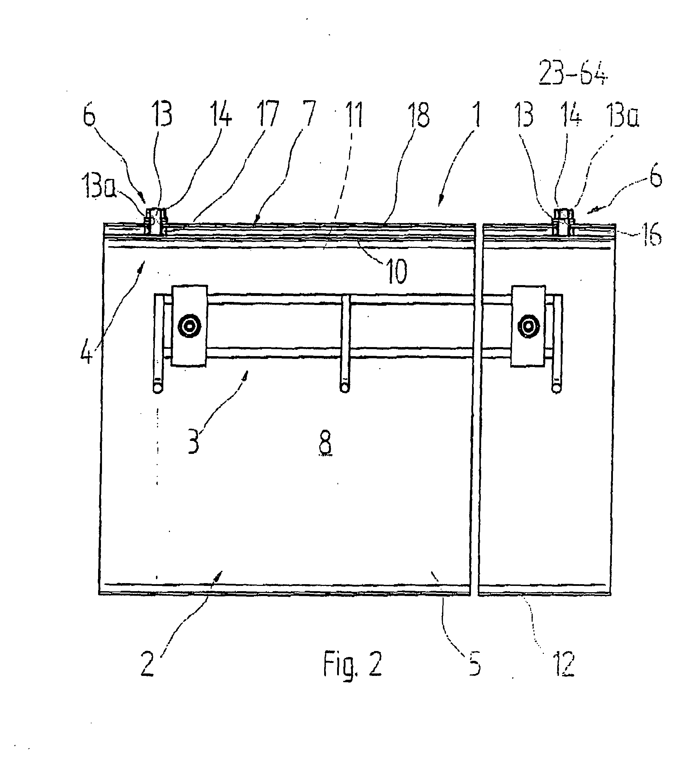

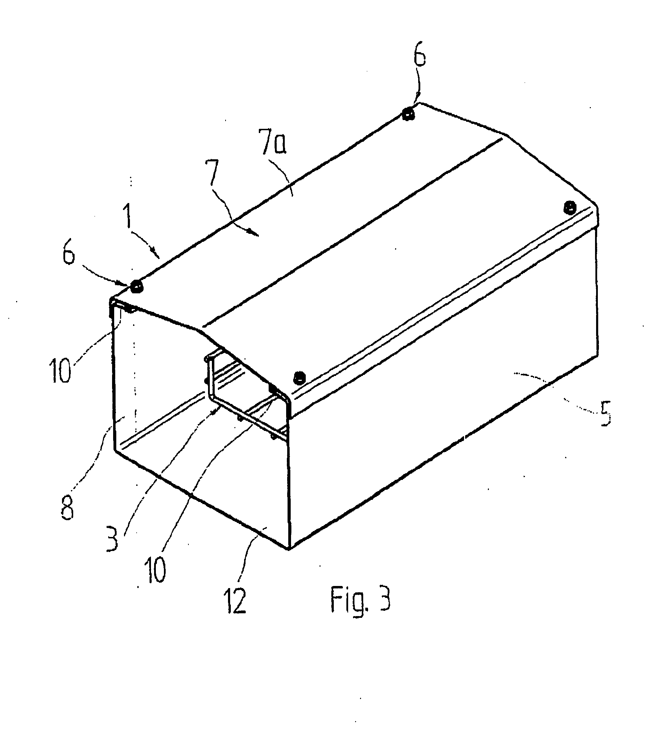

Es zeigt:
Fig. 1
   einen Querschnitt durch eine bevorzugte Ausführungsform;
Fig. 2
   einen Schnitt längs der Linie II - II in Fig. 1;
Fig. 3
   eine schaubildliche Schrägansicht der Ausführungsform nach den Fig. 1 und 2.

In den Figuren ist ein Kabelkanal bzw- eine Schutzhülle 1 für das Einlegen und Entnehmen von nicht gezeigten Leitungen dargestellt. Sein im Querschnitt U-förmiger Kanal lässt sich in der gezeigten, aufrechten Lage an einem nicht gezeigten Support, wie einer Wand, einem Maschinenteil oder dergl. in bekannter, hier nicht gezeigter, Weise befestigen.

Im Hohlraum dieses Kanals 2 ist bei dieser Ausführungsform nur ein längsverlaufendes Fach 3 für ein Einlegen von Leitungen vorgesehen. Ferner ist eine an freien Enden 4 von Seitenstegen 5 des U-Querschnitts des Kanals 2 mittels Verschraubungen 6 befestigbaren Abdeckung 7 seines für das Einbringen der Leitungen zunächst nach oben offenen Hohlraums vorhanden.

Erfindungsgemäß sind nun
die äußere Oberfläche 7a der Abdeckung 7 relativ zur Richtung der Schwerkraft geneigt angeordnet;
die Randbereiche 10 der freien Enden 4 der Seitenstege 5 jeweils nach innen zur Kanalmittelebene hin abgebogen;
an den der Abdeckung 7 zugewandten Flächen der Randbereiche 10 der Seitenstege 5 Schraubbolzen 13 angesiegelt, die beim Aufbringen der Abdeckung 7
durch mit ihnen fluchtende Löcher 13a in der Abdeckung 7 hindurchsteckbar sind und mit passenden Muttern 14 die genannten Verschraubungen 6 bilden; und die elastischen Dichtstreifen 16 im Bereich der Kanten 15 der Randbereiche 10 der Seitenstege 5 angeordnet und von den Verschraubungen 6 nach innen beabstandet.

Vorteilhaft sind zwischen den Randbereichen 10 der Seitenstege 5 und den Randbereichen 1 der Abdeckung 7 Distanzstücke 17 angeordnet und die nach unten abgebogenen Teile der Seitenränder 11 der Abdeckung 7 weisen jeweils einen Abstand 18 von den angrenzenden Bereichen der Seitenränder 5 auf, derart, dass zwischen diesen Randbereichen 10, 11 Spalte 18 gebildet sind. Diese Spalte 18 dienen dem leichteren Ablauf von durch Kondensation entstandener oder von eingedrungenen Flüssigkeit(en).

Als Distanzstücke 17 haben sich Hülsen bewährt, die bei der Montage vor dem Aufsetzen der Abdeckung 7 auf die Schraubbolzen 13 aufgeschoben werden.

Die Abdeckung 7 weist zweckmäßig die gezeigte Form eines Satteldachs auf, was den Ablauf von insbesondere aufgebrachten Reinigungsflüssigkeiten begünstigt.

Auch wenn sich die Schraubbolzen 13 durch Klebung befestigen ließen, um die gewünschte Dichtheit der Abdeckung 7 zu gewährleisten, so wird doch ein Anschweißen bevorzugt, unabhängig davon, ob der Kabelkanal 2 aus Metall, vorzugsweise rostfreiem Stahl, oder aus Kunststoff gefertigt wird.

Bei den Dichtstreifen 16 hat es sich bewährt, sie an den Randbereichen 10 der Seitenstege 5 anzuklemmen oder aufzustecken.

Wenn auch bei der gezeigten Ausführungsform an der Innenfläche 8 des jeweiligen Seitenstegs 5 nur eine einzige gitterförmige Halterung 9 vorgesehen ist, so versteht es sich doch, dass auch eine Mehrzahl solcher Halterungen 9 als Fächer 3 übereinander angeordnet werden können um weitere nicht gezeigte Leitungen geordnet unterbringen zu können.

Die Gitterform ermöglicht es, die Leitungen leichter zu umfassen, als wenn sie auf einem flächigen Fach abzulegen oder von dort aufzunehmen wären. Außerdem erleichtert eine gitterförmige Halterung das Fixieren der Kabel und Leitungen durch beispielsweise Kabelbinder.

Dabei ist es zweckmäßig, die gitterförmigen Halterungen 9, und zwar zum Zwecke eines Durchgriffs von oben seitens des die jeweils einzulegenden oder herauszunehmenden Leitungen handhabenden Monteurs, jeweils einen entsprechend großen Abstand D vom gegenüberliegenden Seitensteg 5 aufweisen zu lassen, derart, dass die Hände des Monteurs eine zumindest ausreichende Bewegungsfreiheit erhalten.

Das Zu- Abführen einzelner Leitungen in und/oder aus dem Kabelkanal kann an beliebiger Stelle mittels Durchbohrens der Seitenwände 8 und/oder des Bodens 12 erfolgen. Dabei lassen sich handelsübliche, hermetisch abdichtende, sogenannte Kabelverschraubungen einsetzen.

## Patentansprüche

1. Schutzhülle (1) für das Einlegen und Entnehmen von elektrischen Strom, Signale, Steuerbefehle, Flüssigkeiten oder Gase führenden Leitungen in Form von Kabeln, Rohren oder dergl. mit einem längs eines Support, wie einer Wand, eines Plafonds oder dergl., sich erstreckenden und daran befestigbaren und im Querschnitt U-förmigen Kanal (2) aus insbesondere Metall oder Kunststoff, sowie mit einer an freien Enden (4) von Seitenstegen (5) des U-Querschnitts des Kanals (2) mittels Verschraubungen (6) befestigbaren Abdeckung (7) seines für das Einbringen der Leitungen zunächst nach oben offenen Hohlraums, wobei Randbereiche (10) der freien Enden (4) der Seitenstege (5) im Wesentlichen parallel zur gegenüberliegenden Innenfläche (7b) der Abdeckung (7) abgebogen sind und Randbereiche (11) der Abdeckung (7) die Randbereiche (10) der Seitenstege (5) übergreifen und im Wesentlichen parallel zu den Seitenstegen (5) hin abgebogen sind, und ferner in Kanalrichtung verlaufende elastische Dichtstreifen (16) zwischen diesen Randbereichen (10) und der Innenfläche (7b) der Abdeckung (7) angeordnet sind,
dadurch gekenntzeichnet,
dass die äußere Oberfläche (7a) der Abdeckung (7) relativ zur Richtung der Schwerkraft geneigt angeordnet ist,
dass die Randbereiche (10) der freien Enden (4) der Seitenstege (5) jeweils nach innen zur Kanalmittelebene hin abgebogen sind,
dass an den der Abdeckung (7) zugewandten Flächen der Randbereiche (10) der Seitenstege (5) Schraubbolzen (13) angesiegelt sind, die beim Aufbringen der Abdeckung (7) durch mit ihnen fluchtende Löcher (13a) in der Abdeckung (7) hindurchsteckbar sind und mit passenden Muttern (14) die genannten Verschraubungen (6) bilden, und
dass die elastischen Dichtstreifen (16) im Bereich der Kanten (15) der Randbereiche (10) der Seitenstege (5) angeordnet und von den Verschraubungen (6) nach innen beabstandet sind.

2. Schutzhülle (1) nach Anspruch 1,
**dadurch gekennzeichnet,**
**dass** die Randbereiche (10) der freien Enden (4) der Seitenstege (5) im Wesentlichen die gleiche Neigung aufweisen wie die Randbereiche (11) der Abdeckung (7).

3. Schutzhülle (1) nach Anspruch 1 oder 2,
**dadurch gekennzeichnet,**
**dass** zwischen den Randbereichen (10) der Seitenstege (5) und den Randbereichen (1) der Abdeckung (7) Distanzstücke (17) angeordnet sind, und
**dass** die nach unten abgebogenen Teile der Seitenränder (11) der Abdeckung (7) jeweils einen Abstand (18) von den angrenzenden Bereichen der Seitenränder (5) aufweisen, derart, dass zwischen diesen Randbereichen (10; 11) Spalte (18) gebildet sind.

4. Schutzhülle (1) nach Anspruch 3,
**dadurch gekennzeichnet,**
**dass** die Distanzstücke (17) Hülsen sind, die auf den Schraubbolzen (13) sitzen.

5. Schutzhülle (1) nach Anspruch 1,
**dadurch gekennzeichnet,**
**dass** die Abdeckung (7) die Form eines Satteldachs aufweist.

6. Schutzhülle (1) nach einem der vorhergehenden Ansprüche,
**dadurch gekennzeichnet,**
**dass** die Schraubbolzen (13) angeschweißt sind

7. Schutzhülle (1) nach Anspruch 1,
**dadurch gekennzeichnet,**
**dass** die Dichtstreifen (16) an den Randbereichen (10) der Seitenstege (5) angeklemmt, aufgesteckt oder anderweitig dauerhaft befestigt sind.

8. Schutzhülle (1) nach Anspruch 1,
**dadurch gekennzeichnet,**
**dass** zumindest ein im Hohlraum des Kanals (2) vorgesehenes längsverlaufendes Fach (3) mit Halterungen (9) für ein Einlegen und Fixieren von Leitungen vorhanden ist.

9. Schutzhülle (1) nach Anspruch 8,
**dadurch gekennzeichnet,**
**dass** an der Innenfläche (8) des jeweiligen Seitenstegs (5) eine Mehrzahl von gitterförmigen Halterungen (9) etagenartig als Fächer (3) übereinander angeordnet ist.

10. Schutzhülle (1) nach Anspruch 9,
**dadurch gekennzeichnet,**
**dass** die gitterförmigen Halterungen (9), und zwar zum Zwecke eines Durchgriffs von oben seitens des die jeweils einzulegenden oder herauszunehmenden Leitungen handhabenden Monteurs, jeweils einen entsprechend großen Abstand (D) vom gegenüberliegenden Seitensteg (5) aufweisen.

## Claims

1. Protective casing (1) for the introduction and removal of lines, in the form of cables, pipes or the like, which channel electric currents, signals, control commands, liquids or gases, having a cross-sectionally U-shaped channel (2) which extends along a support, such as a wall, a ceiling or the like, and can be fastened thereon, and is made of in particular metal or plastics material, and having a covering (7) which can be fastened at free ends (4) of sidepieces (5) of the U-shaped cross section of the channel (2) by means of screw-connections (6) and is intended for covering the channel cavity, which is open in the upward direction in the first instance so that the lines can be introduced, wherein peripheral regions (10) of the free ends (4) of the sidepieces (5) are bent essentially parallel to the inner surface (7b) of the covering (7), said inner surface being located opposite, and peripheral regions (11) of the covering (7) engage over the peripheral regions (10) of the sidepieces (5) and are bent essentially parallel in the direction of the sidepieces (5) and, furthermore, elastic sealing strips (16) running in the channel direction are arranged between said peripheral regions (10) and the inner surface (7b) of the covering (7),
**characterized**
**in that** the outer surface (7a) of the covering (7) is inclined relative to the direction of gravitational force,
**in that** the peripheral regions (10) of the free ends (4) of the sidepieces (5) are each bent inwards in the direction of the channel centre plane,
**in that** screw bolts (13) are sealed on those surfaces of the peripheral regions (10) of the sidepieces (5) which are directed towards the covering (7), and these screw bolts, when the covering (7) is placed in position, can be plugged throughholes (13a) in the covering (7) which are aligned with them, and form the aforementioned screw-connections (6) with appropriate nuts (14), and
**in that** the elastic sealing strips (16) are arranged in the region of the edges (15) of the peripheral regions (10) of the sidepieces (5) and are spaced apart inwards from the screw-connections (6).

2. Protective casing (1) according to Claim 1,
**characterized**
**in that** the peripheral regions (10) of the free ends (4) of the sidepieces (5) have essentially the same inclination as the peripheral regions (11) of the covering (7).

3. Protective casing (1) according to Claim 1 or 2,
**characterized**
**in that** spacers (17) are arranged between the peripheral regions (10) of the sidepieces (5) and the peripheral regions (11) of the covering (7), and
**in that** the downwardly bent parts of the side peripheries (11) of the covering (7) are each at a distance (18) from the adjacent regions of the side peripheries (5) such that gaps (18) are formed between said peripheral regions (10; 11).

4. Protective casing (1) according to Claim 3,
**characterized**
**in that** the spacers (17) are sleeves which are seated on the screw bolts (13).

5. Protective casing (1) according to Claim 1,
**characterized**
**in that** the covering (7) is in the form of a gable roof.

6. Protective casing (1) according to one of the preceding claims,
**characterized**
**in that** the screw bolts (13) are welded on.

7. Protective casing (1) according to Claim 1,
**characterized**
**in that** the sealing strips (16) are fastened on the peripheral regions (10) of the sidepieces (5) by clamping on, plugging on or in some other durable manner.

8. Protective casing (1) according to Claim 1,
**characterized**
**in that** there is at least one longitudinally running compartment (3) which is provided in the cavity of the channel (2) and has holders (9) so that lines can be introduced and fixed therein.

9. Protective casing (1) according to Claim 8,
**characterized**
**in that** a plurality of latticework holders (9) are arranged one above the other on different levels as compartments (3) on the inner surface (8) of the respective sidepiece (5).

10. Protective casing (1) according to Claim 9,
**characterized**
**in that** the latticework holders (9) are each at an appropriately large distance (D) from the sidepiece (5) located opposite, to be precise so that the fitter who is handling the lines which are to be introduced or removed in each case can reach through from above.

## Revendications

1. Enveloppe de protection (1) pour l'insertion et l'enlèvement de conduites sous forme de câbles, de tubes, ou similaires, conduisant du courant électrique, des signaux, des ordres de commande, des liquides ou des gaz, comprenant un canal (2) de section transversale en forme de U s'étendant le long d'un support, tel qu'une paroi, un plafond ou similaire, et pouvant être fixé à celui-ci ou celle-ci, notamment en métal ou en plastique, et comprenant également un recouvrement (7) de sa cavité initialement ouverte vers le haut pour l'insertion des conduites, pouvant être fixé au moyen de vissages (6) aux extrémités libres (4) de flancs latéraux (5) de la section transversale en forme de U du canal (2), des régions de bord (10) des extrémités libres (4) des flancs latéraux (5) étant cintrées essentiellement parallèlement à la surface intérieure opposée (7b) du recouvrement (7) et des régions de bord (11) du recouvrement (7) venant en prise par le dessus avec les régions de bord (10) des flancs latéraux (5) et étant cintrées essentiellement parallèlement vers les flancs latéraux (5), et en outre des bandes d'étanchéité élastiques (16) s'étendant dans la direction du canal étant disposées entre ces régions de bord (10) et la surface intérieure (7b) du recouvrement (7),
**caractérisée en ce que**
la surface extérieure (7a) du recouvrement (7) est disposée de manière inclinée par rapport à la direction de la force de pesanteur,
les régions de bord (10) des extrémités libres (4) des flancs latéraux (5) sont cintrées à chaque fois vers l'intérieur vers le plan médian du canal,
des boulons filetés (13) sont scellés au niveau des surfaces des régions de bord (10) des flancs latéraux (5) tournées vers le recouvrement (7), lesquels boulons filetés, lors de l'application du recouvrement (7), peuvent être enfoncés dans le recouvrement (7) à travers des trous (13a) alignés avec ceux-ci et forment lesdits vissages (6) avec des écrous adaptés (14) et
les bandes d'étanchéité élastiques (16) sont disposées dans la région des arêtes (15) des régions de bord (10) des flancs latéraux (5) et sont espacées vers l'intérieur par rapport aux vissages (6).

2. Enveloppe de protection (1) selon la revendication 1,
**caractérisée en ce que**
les régions de bord (10) des extrémités libres (4) des flancs latéraux (5) présentent essentiellement la même inclinaison que les régions de bord (11) du recouvrement (7).

3. Enveloppe de protection (1) selon la revendication 1 ou 2,
**caractérisée en ce que**
des éléments d'espacement (17) sont disposés entre les régions de bord (10) des flancs latéraux (5) et les régions de bord (11) du recouvrement (7), et
les parties des bords latéraux (11) du recouvrement (7) cintrées vers le bas présentent à chaque fois une distance (18) par rapport aux régions adjacentes des bords latéraux (5), de telle sorte qu'entre ces régions de bord (10 ; 11) soient formés des interstices (18).

4. Enveloppe de protection (1) selon la revendication 3,
**caractérisée en ce que**
les éléments d'espacement (17) sont des douilles, qui reposent sur les boulons filetés (13).

5. Enveloppe de protection (1) selon la revendication 1,
**caractérisée en ce que**
le recouvrement (7) a la forme d'un toit à deux versants.

6. Enveloppe de protection (1) selon l'une quelconque des revendications précédentes,
**caractérisée en ce que**
les boulons filetés (13) sont soudés.

7. Enveloppe de protection (1) selon la revendication 1,
**caractérisée en ce que**
les bandes d'étanchéité (16) sont fixées par serrage, enfichage ou par une autre fixation durable aux régions de bord (10) des flancs latéraux (5).

8. Enveloppe de protection (1) selon la revendication 1,
**caractérisée en ce**
**qu'**au moins un compartiment (3) s'étendant en longueur et prévu dans la cavité du canal (2) est pourvu de fixations (9) pour l'insertion et la fixation de conduites.

9. Enveloppe de protection (1) selon la revendication 8,
**caractérisée en ce**
**qu'**une pluralité de fixations (9) en forme de grille sont disposées de manière étagée les unes au-dessus des autres sous forme de compartiments (3) au niveau de la surface intérieure (8) du flanc latéral respectif (5).

10. Enveloppe de protection (1) selon la revendication 9,
**caractérisée en ce que**
les fixations en forme de grille (9), dans le but d'un passage depuis le haut par le monteur manipulant les conduites respectives à introduire ou à ressortir, présentent à chaque fois une distance (D) aussi grande par rapport au flanc latéral opposé (5).
